# EUROPEAN PATENT SPECIFICATION

(11) **EP 2 273 827 B1**
(45) Date of publication and mention of the grant of the patent: **31.07.2013**
(21) Application number: 09290517.3
(22) Date of filing: 30.06.2009
(51) Int. Cl.: H04W 52/02

(54) **Interference mitigation and avoidance whitin femtocells**
Interferenzabschwächung und -vermeidung in Femtozellen
Réduction et évitement des interférences dans des femtocellules

(43) Date of publication of application: 12.01.2011
(73) Proprietor: Alcatel Lucent, 75007 Paris (FR)
(72) Inventor: Conte, Alberto, 75007 Paris (FR); Leclerc, Brice, 75007 Paris (FR)
(74) Representative: Therias, Philippe

(56) References cited:
- WO-A1-2008/131588
- "A method for interference control and power saving for home access point" IP.COM JOURNAL, IP.COM INC., WEST HENRIETTA, NY, US, 13 December 2007 (2007-12-13), XP013122942 ISSN: 1533-0001
- MITSUBISHI ELECTRIC: "Dynamic Setup of HNBs for Energy Savings and Interference Reduction" 3GPP DRAFT; R3-081949 (DYNAMIC SETUP HNBS), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jeju Island; 20080813, 13 August 2008 (2008-08-13), XP050165010 [retrieved on 2008-08-13]
- HUAWEI: "hNB Interference Reduction" 3GPP DRAFT; R2-080188, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sevilla, Spain; 20080108, 8 January 2008 (2008-01-08), XP050138063 [retrieved on 2008-01-08]
- ALCATEL-LUCENT: "Capacity and Coverage SON Use case" 3GPP DRAFT; R3-080082_SONCAPA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Sorrento, Italy; 20080205, 5 February 2008 (2008-02-05), XP050163314 [retrieved on 2008-02-05]

## Description

### FIELD OF THE INVENTION

The present invention relates generally to optimal femtocells deployment, and more particularly to power saving and interference mitigation and avoidance within these networks.

### BACKGROUND OF THE INVENTION

With the evolving wireless data and multimedia services under increasing Quality-of-Service (QoS) constraints, an optimal deployment of wireless cellular networks is usually faced with numerous dilemmas such as coverage area, installation budget, securities standards, authorized frequency bands, and channel capacity. A conventional solution consists in splitting up an environment of interest into a number of small cells leading to a QoS enhancement but to the detriment of additional network resources and infrastructures deployment on the load of networks operators. A less expensive alternative is the recent concept of femtocells.

Femtocell is a new concept within wireless cellular networks that allows a terminal user to install his own small base station in his indoor environment, using licensed spectrum. Hence, a better indoor coverage and more bandwidth, resulting in higher data transmission rate and a better QoS guarantees, are provided to the end-user, mutually offering less expenditure for networks operators.

However and despite the huge belief of scientific and industrial communities on femtocell, expected as the panacea for high wireless data transmission rate within current cellular network, there are several complications that need to be overcome. The key challenge is mainly interference mitigation and avoidance as interference phenomena has undoubtedly a critical effect on wireless systems performance. In particular, femtocells suffer from
- femtocell-vs.-femtocell interference. Each user may freely locate his femtocell base station (FBS), likely to ensure the coverage of a certain area within his environment. Accordingly, deployed FBSs may be randomly located and with different density, making the intra-interference phenomena inevitable. As an example, deployed femtocells on different floors of the same building can create interference to each other ;
- macrocell-vs.-femtocell interference or cross-tier interference. The weak point of cellular networks is coverage holes. Thus, in this regards, macrocell base stations (MBS) and FBS cooperate so as to offer connectivity wherever is a request. But, two spatially neighbor uplink (similarly downlink) connections, respectively, to a femtocell and to a macrocell and using the same frequency/time may be mutually interferenced;
- environmental interference. FBS may be close to others indoor wireless devices (for example printers and electromechanical devices) which may generate noise signals.

Interference, whatever intra- or cross-tier it is, severely reduces the coverage area and limits the expected system capacity. Hence, Interference mitigation and avoidance is one of the key issues to be addressed for a successful femtocell deployment.

Known solutions for interference mitigation and avoidance may be classified in three main classes, namely,
- diversity techniques such as code, frequency, temporal and, spatial diversities. As an example, frequency diversity techniques focus on an optimal spectrum planning such as separate carriers, shared carriers, partially shared carriers or dynamic frequency reuse. Most of legacy standards (for example GSM or UMTS) ensure intra-cell orthogonality among macrocellular users and mitigate inter-cell interference through fractional frequency reuse. Recent standards focus on simultaneous use of more than one diversity feature such as space-time diversity or space-frequencytime diversity as for MIMO-OFDM systems ;
- power control techniques. These methods rely on some assumption on the path-loss models so as to adjust the transmitted power and hence alter the coverage area and reduce interference areas;
- state of FBS: in "Operation for Inactive Mode of Femto Base Stations in IEEE 802.16.m", IEEE C802.16m-0811603, Namgi Kim et al. propose an inactive mode for femto BS in order to decrease inter-cell interference by inactivating the needless femto base stations. A femto BS in inactive mode does not generate any control or data information except its preamble. In "Femtocell BS Idle Mode and Sleep Mode", IEEE S802.16m-08/1423r1, Wei-peng Chen et al. propose that FBS enters idle/sleep mode when it is not serving active mobile stations (MS). But, idle FBS must periodically wakeup to serve MSs. During idle/sleep interval FBS stop transmission.

One can further mention interference cancellation techniques which aim at eliminating from the desired received signal, any interfering ones. These techniques have poor performances when interference is strong or the interfering signals frequencies are close to, or the same as, those of the desired ones. In addition, they require onboard signal processing equipments which may overweight the overall signal processing within the transmission chain.

However, it is to be noted that interference mitigation and avoidance techniques based on diversity technique increase the complexity of femtocell transmitter-receiver chain by requiring additional resources (such as antennas, frequencies, signal processing circuits) with no power consumption reduction. Similarly, power control techniques solve partially, the interference problem as they alter the capacity gain.

Up-to-date femto BS statue-based solutions for interference mitigation and avoidance do not optimally solve the problem as power saving as well as interference mitigation and avoidance are not optimally solved as long FBS remains transmitting preamble or periodically auto-resume transmission.

The document (Siemens AG, et al., "A method for interference control and power saving for home access point", 13-12-2007) proposes a method for interference control and power saving for home access point.

The document (Mitsubishi Electric, "Dynamic setup of HNBs for energy savings and interface, reduction", 3GPP R3-081949, 13-08-2008) describes a dynamic setup of HNBs for energy savings and interference reduction.

The document WO 2008/131588 presents a method for interference reduction through proximity based transmission mode change.

The document (Huawei, "hNB Interference reduction", 3GPP R2-080188, 08-01-2008) proposes a method for hNB interference reduction.

The document (Alcatel-Lucent, "Capacity and Coverage SON Use case", 3GPP R3-080082, 05-02-2008) describes a network with an auto-tuning ability of capacity and coverage via equipments switch on/off and automatic reconfiguration of antenna parameters.

One object of the present invention is to avoid interference within hierarchical cellular networks.

Another object of the present invention is to save energy in femtocells deployment.

Another object of the present invention is to provide a method for mitigating and avoiding femtocell-vs.-femtocell interference.

Another object of the present invention is to mitigate and avoid macrocell-vs.-femtocell interference.

Another object of the present invention is to mitigate and avoid interference within femtocell networks while keeping capacity gains and QoS guaranties.

Another object of the present invention is to provide self-avoiding and a self-mitigation abilities of interference within femtocells.

### DESCRIPTION OF THE DRAWING

The objects, advantages and other features of the present invention will become more apparent from the following disclosure. The following non-restrictive description of a preferred embodiment of the invention is given for the purpose of exemplification only, with reference to the accompanying drawings in which
- Fig.1 is a schematic diagram illustrating modes transition procedure of a FBS according to an embodiment of the present invention ; and
- Fig.2 is schematic diagram illustrating functional modules that are included in a FBS according to the present invention.

### SUMMARY OF THE INVENTION

The present invention relates to a method for power saving and interference mitigation or avoidance within a cellular networks including at least one femto base station, wherein said femto base station goes in idle mode, whenever no mobile station is detected or managed thereby, comprising a step of shutting down all radio emission from the femto base station and remaining listening to reactivation requests, then be woken up via an umbrella macro base station, through the backhaul line:
- upon a mobile station attachment on the said umbrella macro base station, the core network estimates the location of the mobile station;
- the core network selects the Idle femto base station to be waked up;
- the core network notifies an activation request to the selected femto base station, and if the mobile station does not hear the reactivated femto base station, the core network selects another femto base station within the vicinity of the estimated location of the mobile station..

The present invention further relates to a system including a core network, a macro umbrella base station, a femto base station and other femto base stations, said femto base station comprising:
- means for detecting the absence of mobile stations being managed thereby when it is in active mode; and
- means for listening to reactivation requests when it is in idle mode.
said means for detecting the absence of mobile stations shutdowns all radio emission from the femto base station whenever no mobile station is being managed thereby, resulting in an idle mode of the femto base station; and
said means for listening to reactivation requests reactivate radio emission of the femto base station whenever a reactivation request is listened, resulting in a active mode of the femto base station, the said reactivation request is sent by an umbrella macro base station, through the backhaul line:
- upon a mobile station attachment on the said umbrella macro base station, the core network estimates the location of the mobile-station;
- the core network selects the idle femto base station to be waked up;
- the core network notifies an activation request to the selected femto base station, and if the mobile station does not hear the reactivated femto base station, the core network selects another femto base station within the vicinity of the estimated location of the mobile station.

Advantageously, an idle femto base station may be woken up through transmitted signal from mobile station or activation request from the core network.

One of the advantageous of the present invention is the ease incorporation of the, method into existing wireless mobile stations and femtocell base stations without significant hardware or software redesign.

One of the advantageous of the present invention is its adaptability to different radio interface standards and licensed radio frequencies.

### DETAILED DESCRIPTION OF ILLUSTRATIVE EMBODIMENTS

In order to reduce power consumption and avoid interference, an idle mode for FBS is defined. FBS in idle mode shutdowns its radio emission but stay in listening. In other words, FBS in idle mode does not transmit any signal on the air interface but it remains listening to reactivation signals and requests.

FBS in idle mode turns off its radio emission and wait for wake-up signal and requests. FBS in idle mode transmits on the air interface neither control, neither information data, nor preamble.

In one embodiment, FBS goes in idle mode when no MS is attached to it or all attached MSs are in idle or sleep mode.

In one embodiment, FBS is set in idle mode by its gateway when all the associated MS are attached to other cells, or are in other paging areas.

In one embodiment, FBS goes in idle mode if it does not have any MS which should be managed since a predefined period of time.

In one embodiment, FBS goes in idle mode according to a scheduler (for example, from midnight to 8h:00, from midday to 14h:00 each day, august month).

Transition from idle mode to active mode of FBS may be initiated by an explicit signaling from MS. MS addresses a connectivity request towards a targeted FBS of which it has its parameters. As non-limitative examples of such parameters, one can mention the frequency and/or identifiers (such as code, name or address). These parameters may be entered by the user or automatically retrieved from FBS when it is in active mode.

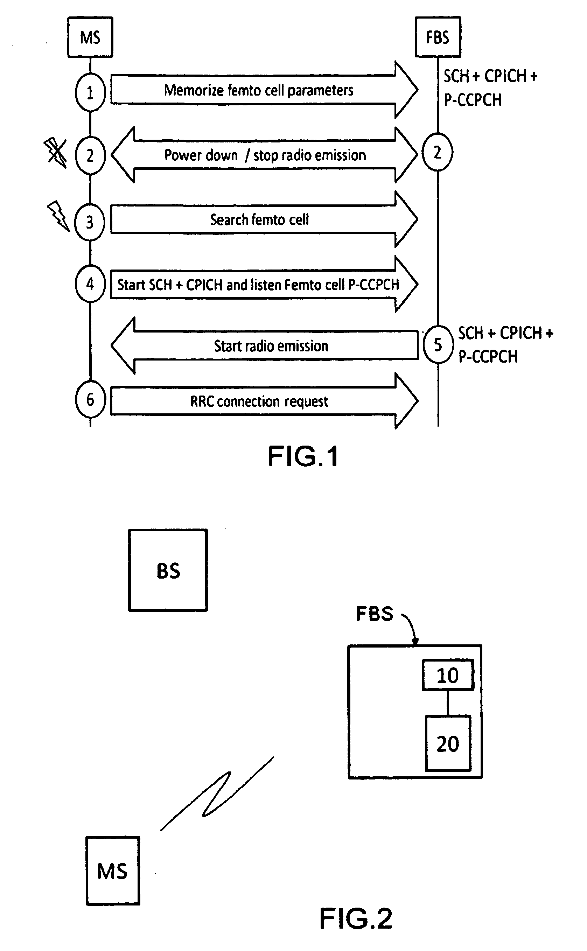

By way of example, figure 1 shows modes transition procedures of an UMTS FBS:
- when MS and FBS are both in active mode, the MS memorizes the parameters of FBS (step 1 on figure 1) ;
- when MS, supposed to be the unique MS to be currently managed by FBS, is switched off or enters an idle mode, FBS shutdowns its radio emission as no one is currently attached to it. Hence, FBS goes in idle mode, only listening to transmitted signals (step 2 on figure 1) ;
- as soon as the MS is powered up, MS searches for available cells (step 3 on figure 1). As it does not hear the FBS, it sends the SCH (Synchronization channel) and CPICH (Common Pilot Channel) of this FBS and listens to the P-CCPCH (Primary Common Control Physical Channel) (step 4 on figure 1) ;
- FBS which is yet in idle mode and does only listen to transmitted signals, recognizes its SCH and CPICH, then reactivates its radio emission (step 5 on figure 1);
- MS hears the P-CCPCH sent by the FBS, then stops sending SCH and CPTCH and starts RRC connection as usual (step 6 on figure 1).

It must be noted that the transmitted signal by the MS, permits
- to identify the targeted FBS to be waked up. Then, only the targeted FBS wakes up and not all the FBS in the vicinity: and
- to enable the FBS to synchronize itself with the MS. Then the attachment procedure can go on without waiting until the FBS sends its SCH and MS synchronizes itself with the FBS.

In another embodiment, an idle FBS may be waked up by core network. In fact, upon a MS attachment on a MBS, the core network may deduce that the MS is near an idle FBS. Then, the core network sends an activation request message to the idle FBS. To this end, the core network utilizes the propagation delay between the MS and the MBS in order to estimate the location of the MS and, accordingly, selects a FBS to be activated. Obviously, with this embodiment, FBS can go in active or idle mode only if its coverage area is overlapped with that of the MBS.

As a non limitative example, an UMTS FBS may be woken up by its access gateway, through the backhaul line, when MS starts a RRC (Radio Resource Control) connection on the umbrella Macro cell. In fact, when a MS powers up, it searches, as usual, for available cells. As MS does not discover the UMTS FBS, in idle mode, MS start a RRC connection on the umbrella Macro cell, sending a RRC connection request as usual on CCCH (Common Control Channel). Then, FBS may be woken up by its Access gateway, through the backhaul line, and reactivates its radio emission. Then, while waiting for the RRC connection setup message from MBS, MS discovers the reactivated UMTS FBS. Hence, as soon as the MS hears its UMTS FBS, it performs RRC connection on it.

It is to be noted that if the MS does not hear the reactivated FBS, MS goes on with the RRC connection on the umbrella MBS. In another embodiment, MBS reactivates another FBS within the vicinity of the estimated location of the MS.

In one embodiment, when an idle FBS gets the activation request from a MS by MBS, FBS first checks that the requester MS is authorized to reactivate the FBS. If the request is allowable, the idle FBS goes back to the active mode. Allowable requests may concern only one MS, a group of MSs, or simply any MS.

In an embodiment, FBS is set in idle mode by its Access gateway when all the associated MS are attached on other cells or are in other paging area.

In this regards and with reference now to figure 2, FBS is provided with a detection module 10 responsible for
- detecting the absence of MS being managed by FBS when FBS is in active mode; and
- listening to reactivation requests, either from Core Network, from Access Gateway or from MS, when FBS is in idle mode.

Detection module 10 is linked to the radio emission module 20 of FBS, and whenever, detection module 10 decides on the absence of MS linked to FBS, detection module 10 shutdowns the radio emission module 20. Similarly, whenever a reactivation request, sent either by MS or by Core Network or Access Gateway, is detected by the detection module 10, the detection module 10 reactivates the radio emission module 20.

In an embodiment, when the detection module 10 detects a reactivation request via the umbrella MBS, it first checks if the request is allowable before reactivating the radio emission module 20. If the request is allowable, the detection module 10 reactivates the radio emission module: FBS goes back to the active mode; otherwise the detection module 10 maintains the radio emission module shutdown: FBS remains in idle mode.

It is to be reminded that the hereinabove cited UMTS FBS embodiment is given for the purpose of example only and is in no case limited to only UMTS radio access technology. In fact, the herein described embodiment may be used within other radio access technologies such as LTE (Long Term Evolution), Wimax, Wifi or UMB (Ultra Mobile Broadband).

At this stage, it is to be noted that herein described embodiments may be deployed within others communicating levels swithin a hierarchical cellular networks. In others words, other than femto cell, these embodiments may be also adopted to reduce power consumption, mitigate and avoid interference in Microcell or Picocell.

The appearance of the phrases "in an embodiment", "in one embodiment" or "in another embodiment" in various places throughout the specification are not necessarily all referring to the same embodiment. Furthermore, the particular features, structures, or characteristics may be combined in any suitable manner in one or more embodiments.

## Claims

1. A method for power saving and interference mitigation or avoidance within a cellular network including at least one femto base station, wherein said femto base station goes in idle mode, whenever no mobile station is detected or managed thereby, **characterized by** shutting down all radio emission from the femto base station and remaining listening to reactivation requests, then be woken up via an umbrella macro base station, through the backhoul line:
- upon a mobile station attachment on the said umbrella macro base station, the core network estimates the location of the mobile station;
- the core network selects the idle femto base station to be waked up;
- the core network notifies an activation request to the selected femto base station, and if the mobile station does not hear the reactivated femto base station; the core network selects another femto base station within the vicinity of the estimated location of the mobile station.

2. The method of claim 1, wherein the idle femto base station is woken up through signal transmitted from mobile station, said signal permitting to
- identify the targeted femto base station to be waked up; and
- enable the femto base station to synchronize itself with the MS.

3. The method of claim 1, wherein the mobile station leaves its ongoing Radio Resource Control connection on the umbrella macro base station and goes on with the waked up femto base station as soon as it hears it.

4. The method of any of claims 1 to 3, wherein the selected femto base station first checks that the requester mobile station is authorized to reactivate it.

5. A system including a core network, a macro umbrella base station, a femto base station and other femto base stations, **characterized in that** said femto base station comprises:
- means for detecting the absence, of mobile stations being managed thereby, when it is in active mode; and
- means for listening to reactivation requests when it is in idle mode.
said means for detecting the absence of mobile stations is further configured to shutdown: all radio emission from the femto base station whenever no mobile station is being managed thereby, resulting in an idle mode of the femto base station; and.
said means for listening to reactivation requests is further configured to reactivation radio emission of the femto base station whenever a reactivation request is listened, resulting in a active mode of the femto base station, the said reactivation request is sent via ab unbrella macro base station, through the backhaul line:
- upon a mobile station attachment on the said umbrella macro base station, the core network estimates the location of the mobile station;
- the core network selects the idle femto base station to be waked up:
- the core network notifies an activation request to the selected femto base station, and if the mobile statition does not hear the reactivated femto base station, the core network selects another femto base station within the vicinity df the estimated location of the mobile station.

6. The system of claim 5 wherein the means for listening is to reactivation requests of the base station further configured to listen to a reactivation request, said means first check if the request is allowable before reactivating the radio emission module.

## Patentansprüche

1. Verfahren zum Sparen von Strom und zur Minderung oder Abwendung von Interferenzen innerhalb eines zellularen Netzwerks mit mindestens einer Femto-Basisstation, wobei die besagte Femto-Basisstation in den Ruhemodus versetzt wird, wenn keine Mobilstation erkannt oder durch diese verwaltet wird, **dadurch gekennzeichnet, dass** die Femto-Basisstation alle Funkemissionen ausschaltet und durch das Ausschalten aller Funkemissionen von der Femto-Basisstation und nach Reaktivierungsanforden.rngen abhört, und über eine Schirm-Makrobasisstation, durch die Backhaul-Leitung, aufgeweckt wird:
- Bei Anbindung einer Mobilstation an die besagte Schirm-Makrobasisstation schätzt das Kernnetzwerk den Aufenthaltsort der Mobilstation;
- das Kernnetzwerk wählt die aufzuweckende ruhende Femto-Basisstation aus;
- das Kernnetzwerk stellt der ausgewählten Femto-Basisstation eine Aktivierungsanforderung zu, und wenn die Mobilstation die reaktivierte Femto-Basisstation nicht hört, wählt das Kernnetzwerk eine andere Femto-Basisstation in Nähe des geschätzten Aufenthaltsorts der Mobilstation aus.

2. Verfahren nach Anspruch 1, wobei die ruhende Femto-Basisstation über ein von der Mobilstation übertragenes Signal aufgeweckt wird, wobei das Signal es ermöglicht,
- die aufzuweckende Ziel-Femto-Basisstation zu identifizieren; und
- die Femto-Basisstation zu befähigen, sich mit der MS zu synchronisieren.

3. Verfahren nach Anspruch 1, wobei die Mobilstation ihre aktuelle Funkressourcensteuerungsverbindung auf der Schirm-Makrobasisstation verlässt und mit der aufgeweckten Femto-Basisstation fortfährt, sobald diese sie hört.

4. Verfahren nach einem beliebigen der Anspruche 1 bis 3, wobei die ausgewählte Femto-Basisstation zuerst prüft, ob die anfordernde Mobilstation berechtigt ist, diese zu reaktivieren.

5. System, umfassend ein Kemnetzwerk, eine Schirm-Makrobasisstation, eine Femto-Basisstation und weitere Femto-Basisstationen, **dadurch gekennzeichnet, dass** die besagte Femto-Basisstation umfasst:
- Mittel zum Erkennen der Abwesenheit von Mobilstationen, welche durch sie verwaltet werden, wenn sie sich im aktiven Modus befindet; und
- Mittel zum Abhören von Reaktivierungsanforderungen, wenn sie sich im Ruhemodus befindet;
wobei das Mittel zum Erkennen der Abwesenheit von Mobilstationen weiterhin dafür konfiguriert ist, alle Funkemissionen von der Femto-Basisstation auszuschalten, wenn keine Mobilstation von ihr verwaltet wird, wodurch die Femto-Basisstation in einen Ruhemodus versetzt wird; und
wobei das Mittel zum Abhören von Reaktivierungsanforderungen weiterhin dafür konfiguriert ist, die Funkemission der Femto-Basisstation zu reaktivieren, wenn eine Reaktivierungsanforderung gehört wird; wodurch die Femto-Basisstation in einen aktiven Modus versetzt wird, wobei die besagte Reaktivierungsanforderung über eine Schirm-Makrobasisstation, durch die Backhaul-Leitung, gesendet wird:
- Bei Anbindung an die besagte Schirm-Makrobasisstation schätzt das Kernnetzwerk den Aufenthaltsort der Mobilstation;
- das Kernnetzwerk wählt die aufzuweckende ruhende Femto-Basisstation aus;
- das Kernnetzwerk stellt der ausgewählten Femto-Basisstation eine Aktivierungsanforderung zu, und wenn die Mobilstation die reaktivierte Femto-Basisstation nicht hört, wählt das Kernnetzwerk eine andere Femto-Basisstation in Nähe des geschätzten Aufenthaltsorts der Mobilstation aus.

6. System nach Anspruch 5, wobei das Mittel zum Abhören von Reaktivierungsanforderungen der Femto-Basisstation weiterhin dafür konfiguriert ist, eine Reaktivierungsanforderung abzuhören, wobei das Mittel zuerst prüft, ob die Anforderung zulässig ist, bevor das Funkemissionsmodul reaktiviert wird.

## Revendications

1. Procédé d'économie d'énergie et pour atténuer ou éviter des interférences dans un réseau cellulaire comprenant au moins une station de base femto, dans lequel ladite station de base femto passe en mode repos, à chaque fois qu'aucune station mobile n'est détectée ou gérée par celle-ci, **caractérisé en ce qu'**il coupe toute émission radio provenant de la station de base femto et reste à l'écoute des demandes de réactivation, puis est réveillé par une station de base macro parapluie, par l'intermédiaire de la ligne de raccordement :
- lorsqu'une station mobile s'attache à ladite station de base macro parapluie, le coeur de réseau estime l'emplacement de la station mobile ;
- le coeur de réseau sélectionne la station de base femto au repos devant être réveillée ;
- le coeur de réseau signale une demande d'activation à la station de base femto sélectionnée et, si la station mobile n'entend pas la station de base femto réactivée, le coeur de réseau sélectionne une autre station de base femto à proximité de l'emplacement estimé de la station mobile.

2. Procédé selon la revendication 1, dans lequel la station de base femto au repos est réveillée par le signal transmis depuis la station mobile, ledit signal permettant
- d'identifier la station de base femto ciblée devant être réveillée ; et
- de permettre à la station de base femto de se synchroniser avec la MS.

3. Procédé selon la revendication 1, dans lequel la station mobile désactive sa connexion de commande de ressources radio en cours à la station de base macro parapluie et poursuit avec la station de base femto réveillée dès qu'elle l'entend.

4. Procédé selon l'une quelconque des revendications 1 à 3, dans lequel la station de base femto sélectionnée vérifie d'abord que la station mobile demandeuse est autorisée à la réactiver.

5. Système comprenant un coeur de réseau, une station de base macro parapluie, une station de base femto et d'autres stations de base femto, **caractérisé en ce que** ladite station de base femto comprend :
- des moyens pour détecter l'absence de stations mobiles gérées par celle-ci lorsqu'elle est en mode actif ; et
- des moyens pour écouter des demandes de réactivation lorsqu'elle est en mode repos.
lesdits moyens pour détecter l'absence de stations mobiles sont en outre configurés pour couper toute émission radio provenant de la station de base femto à chaque fois qu'aucune station mobile n'est gérée par celle-ci, faisant ainsi passer la station de base femto en mode repos ; et
lesdits moyens pour écouter des demandes de réactivation sont en outre configurés pour réactiver l'émission radio de la station de base femto à chaque fois qu'une demande de réactivation est écoutée, faisant ainsi passer la station de base femto en mode actif, ladite demande de réactivation est envoyée par une station de base macro parapluie, par l'intermédiaire de la ligne de raccordement :
- lorsqu'une station mobile s'attache à ladite station de base macro parapluie, le coeur de réseau estime l'emplacement de la station mobile ;
- le coeur de réseau sélectionne la station de base femto au repos devant être réveillée ;
- le coeur de réseau signale une demande d'activation à la station de base femto sélectionnée et, si la station mobile n'entend pas la station de base femto réactivée, le coeur de réseau sélectionne une autre station de base femto à proximité de l'emplacement estimé de la station mobile.

6. Système selon la revendication 5 dans lequel les moyens pour écouter des demandes de réactivation de la station de base femto sont en outre configurés pour écouter une demande de réactivation, lesdits moyens vérifient d'abord si la demande peut être accordée avant la réactivation du module d'émission radio.
